# EUROPÄISCHE PATENTANMELDUNG

(11) **EP 0 904 927 A1**
(43) Veröffentlichungstag der Anmeldung: **31.03.1999**
(21) Anmeldenummer: 98116782.8
(22) Anmeldetag: 05.09.1998
(51) Int. Cl.: B29C 67/24, B29B 7/60

(54) **Einrichtung zum Einspritzen eines aus mindestens zwei Komponenten bestehenden Kunststoffes in eine Form**

(30) Priorität: 25.09.1997 AT 599/97 U
(71) Anmelder: Engel Maschinenbau Gesellschaft m.b.H., A-4311 Schwertberg (AT)
(72) Erfinder: Steinbichler, Georg, 8786 Rottenmann (AT); Ebenhofer, Harald, 4320 Perg (AT)
(74) Vertreter: Hofinger, Engelbert, DDr.

(57) **Zusammenfassung**

Einrichtung zum Einspritzen eines aus mindestens zwei Komponenten (A,B) bestehenden Kunststoffes in eine Form, wobei die Komponenten über eine volumetrische Dosiereinheit (5) einer Mischeinrichtung (13) und über diese einem Einspritzzylinder (16) zugeführt werden, und die volumetrische Dosiereinheit (5) in die Spritzgießmaschine integriert ist.

## Beschreibung

Die Erfindung bezieht sich auf eine Einrichtung zum Einspritzen eines aus mindestens zwei Komponenten bestehenden Kunststoffes in eine Form, wobei die Komponenten über eine volumetrische Dosiereinheit einer Mischeinrichtung und über diese einem Einspritzzylinder zugeführt werden.

Ein typisches Beispiel für einen derartigen Kunststoff sind Flüssigsilikonkautschuke. Flüssigsilikonkautschuke unterscheiden sich in ihren rheologischen und thermodynamischen Eigenschatten, die für die Verarbeitung im Spritzgußverfahren entscheidend sind, grundsätzlich von Thermoplasten. Die Materialien werden zumeist als teigige pastöse Zweikomponenten-Materialien mit Schöpfkolbenpumpen aus Behältern gefördert und in einem bestimmten Mengenverhältnis zueinander dosiert. Erst mit der Vermischung der beiden Komponenten beginnt die Vernetzung. Die Flüssigsilikone müssen also nicht wie Thermoplaste für die Verarbeitung aufgeschmolzen werden, sondern nur die beiden Komponenten A und B in einem bestimmten Mengenverhältnis vermischt und für die Werkseugfüllung vordosiert werden. Bei Raumtemperatur läuft die beginnende Vernetzung im vermischten Material nur langsam ab. Um kurze und besonders wirtschaftliche Zykluszeiten zu bekommen, wird das vermischte Material in beheizte Werkzeugkavitäten (typische Werkzeugtemperaturen zwischen 160 und 180°C) eingespritzt. Das Material entzieht dem heißen Werkzeug zur schnellen Vulkanisation Wärme. Die Verhältnisse bei anderen durch chemische Reaktion aushärtenden (vernetzbaren) Kunststoffen sind ähnlich wie bei Flüssigkautschuk.

Üblicherweise befindet sich die volumetrische Dosiereinheit außerhalb der Spritzgießmaschine, was seine Ursache insbesondere darin hat, daß keine konstruktiv einfachen Einrichtungen zur präzisen Zufügung von Additiven bzw. Farbe zu den Komponenten A und B zur Verfügung stehen.

Neuerungsgemäß ist demgegenüber vorgesehen, daß die volumetrische Dosiereinheit in die Spritzgießmaschine integriert ist.

Einzelheiten der Erfindung ergeben sich aus der anschließenden Beschreibung der Zeichnung.

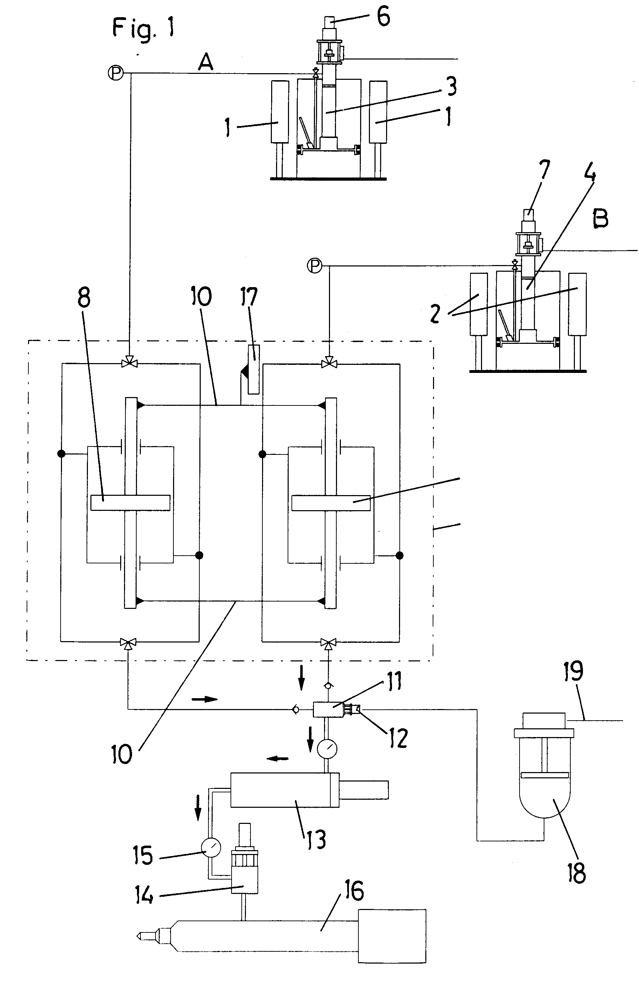

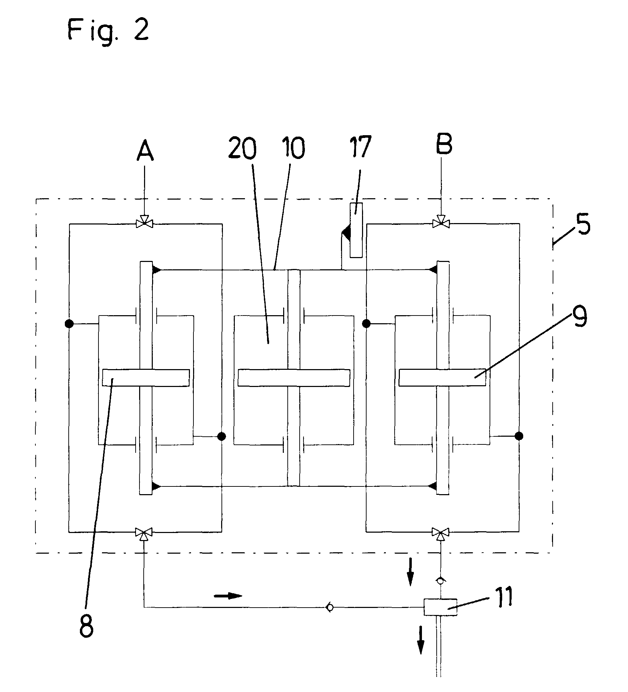

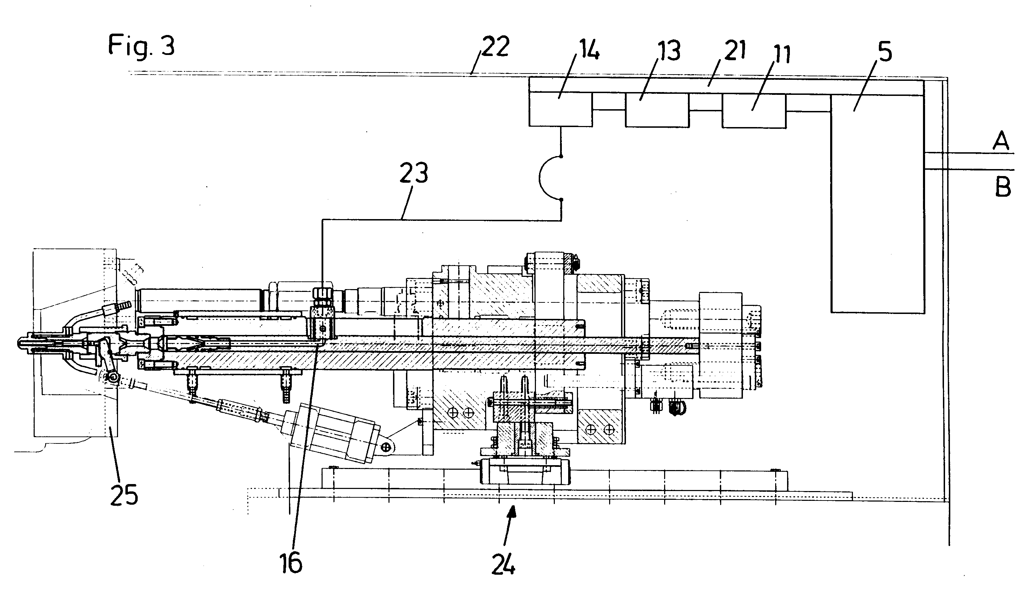

Fig. 1 stellt schematisch eine Mehrkomponentendosieranlage dar, Fig. 2 bezieht sich auf ein zweites Ausführungsbeispiel, welches eine zentrale Materialförderung erlaubt, Fig. 3 zeigt, wie die Integration der Dosiereinheit in die Spritzgießmaschine konstruktiv erfolgt.

Bei der dargestellten Einrichtung werden eine Komponente A und eine Komponente B über Faßpressen 1, 2 durch doppelt wirkende Schöpfkolbenpumpen 3, 4 unter Druck an eine volumetrische Dosiereinheit 5 herangeführt, welche in eine Spritzgießmaschine integriert ist. Die Steuerung des pneumatischen Antriebes 6, 7 der Schöpfkolbenpumpen 3, 4 erfolgt beim Ausführungsbeispiel nach Fig. 1 von der Spritzgießmaschine aus, zu welcher eine Schnittstelle besteht.

Die volumetrische Dosiereinheit 5 und die ihr nachgeschalteten Elemente sind in die Spritzeinheit der Maschine integriert. Die Dosiereinheit 5 besteht aus zwei doppelt wirkenden Dosierkolben 8, 9, welche über mindestens ein Joch 10 mechanisch verbunden sind. Ein Dosierblock 11 kann durch ein Nadelventil 12 Farbe oder ein sonstiges Additiv typischerweise einer Menge von 0,3 % - 4 % der Gesamtmischung zugefügt werden. Ein dynamischer Mischer 13 führt über ein Absperrventil 14 die Mischung, deren Druck von einem Manometer 15 überwacht wird, dem Einspritzzylinder 16 zu.

Die pastösen Einzelkomponenten A und B müssen aus handelsüblichen Gebinden in den Größen 20 bzw. 200 lt. gefördert und fast ausschließlich im Verhältnis 1:1 dosiert werden. Ein konstanter Eingangsförderdruck an der Spritzeinheit 16 ermöglicht es, die Menge des zugeführten Materials durch einen Wegmesser 17, welcher die Position der Dosierkolben 8 und 9 überwacht, zu bestimmen. Das vom Wegmesser 17 gelieferte Signal dient dazu, in Abhängigkeit von der gemessenen Wegstrecke in definierten Abständen das Nadeldosierventil 12 zu betätigen. Die Hubmenge dieses Dosierventils ist einstellbar, die Zuführung der Farbe oder eines sonstigen Additivs erfolgt aus dem Druckbehälter 18, welcher über eine Leitung 19 mit Druck versorgt ist.

Beim Ausführungsbeispiel nach Fig. 2 ist die Möglichkeit gegeben, über einen einzigen Satz von Faßpressen mehrere Spritzgießmaschinen mit jeweils integrierter volumetrischer Dosiereinrichtung zu bedienen. In diesem Fall stellen die Faßpressen immer dann die Komponenten A und B für alle Maschinen zur Verfügung, wenn von einer Maschine eine diesbezügliche Anforderung vorliegt. Der wechselnde Druck würde hier jedoch zu einer Ungenauigkeit in der Dosierung führen, wenn die Verstellung der Dosierkolben 8, 9 genau so wie beim ersten Ausführungsbeispiel lediglich durch den von den Faßpressen erzeugten Druck der Einzelkolben erfolgen würde. Im Unterschied zum Ausführungsbeispiel nach Fig. 1 ist daher gemäß Fig. 2 ein doppelt wirkender pneumatischer Antriebszylinder 20 vorgesehen, welcher mit definiertem Druck die Komponenten A und B aus den entsprechenden Zylindern austreibt. Der pneumatische Zylinder 20 ist mit seiner Kolbenstange am Verbindungsjoch 10 zwischen den Dosierkolben 8 und 9 befestigt. Der Vorteil dieser Anordnung liegt darin, daß mehrere Maschinen gleichzeitig und nicht wie bisher in Folge von einer zentralen Anlage bedient werden können. Die Förderpumpe muß nämlich in diesem Fall lediglich die geförderte Menge an Material zur Verfügung stellen, Massedruckschwankungen seitens der Förderpumpe sind unerheblich.

Fig. 3 zeigt die konstruktive Integration der volumetrischen Dosiereinheit und der dieser nachgeschalteten Einrichtungen in eine Spritzgießmaschine. Der Einspritzzylinder 16, der mit einem Einspritzkolben versehen ist, ist gegenüber der feststehenden Formaufspannplatte 25 auf dem Maschinenrahmen 24 verfahrbar. Die volumetrische Dosiereinheit hingegen ist an einer Konsole 21 befestigt, welche im Inneren eines Schutzgitters bzw. Schutzblechs 22 angeordnet ist. Die Verbindung zwischen der volumetrischen Dosiereinheit 25 und dem Einspritzzylinder läuft über den Dosierblock 11, einen dynamischen Mischer 13, ein Absperrventil 14 und die flexible Schlauchleitung 23. An den Leitungen A und B stehen die entsprechenden Komponenten unter Druck an, wobei dieser Druck im Fall von Fig. 1 auch die Energie für die Dosierung sowie gegebenenfalls die dynamische Mischung liefert, im Fall von Fig. 2 hingegen ein gesonderter Antrieb das Einspritzen und Mischen der bis an die Maschine geförderten Komponenten bewirkt.

## Patentansprüche

1. Einrichtung zum Einspritzen eines aus mindestens zwei Komponenten bestehenden Kunststoffes in eine Form, wobei die Komponenten über eine volumetrische Dosiereinheit einer Mischeinrichtung und über diese einem Einspritzzylinder zugeführt werden, dadurch gekennzeichnet, daß die volumetrische Dosiereinheit (5) in die Spritzgießmaschine integriert ist.

2. Einrichtung nach Anspruch 1, dadurch gekennzeichnet, daß die volumetrische Dosiereinheit von einer Konsole (21) getragen ist, welche an dem die Spritzseite der Spritzgießeinrichtung umgebenden Schutzgitter (22) innen befestigt ist.

3. Einrichtung nach einem der Ansprüche 1 oder 2, dadurch gekennzeichnet, daß die volumetrische Dosiereinheit zwei Dosierkolben (8,9) umfaßt, deren Position durch einen Wegmesser (17) überwacht wid.

4. Einrichtung nach Anspruch 3, dadurch gekennzeichnet, daß das vom Wegmesser gelieferte Signal der Steuerung zur Betätigung eines Nadeldosierventils (12) zugeführt wird.

5. Einrichtung nach Anspruch 3 oder 4, dadurch gekennzeichnet, daß die Dosierkolben (8,9) mit einem in die Spritzgießmaschine integrierten Antrieb (20) versehen sind, wogegen die diesen Dosierkolben (8,9) zugeführten Komponenten durch externe Pumpen (3,4) unter Druck bereitgestellt werden.
